# EUROPEAN PATENT SPECIFICATION

(11) **EP 3 222 392 B1**
(45) Date of publication and mention of the grant of the patent: **17.04.2019**
(21) Application number: 15860556.8
(22) Date of filing: 23.10.2015
(51) Int. Cl.: B25J 5/00, B25J 18/02, F41H 11/16, B25J 9/10, B25J 9/14, B66C 23/42, B66C 23/68, B66C 23/70, B25J 11/00

(54) **ROBOTIC TELESCOPIC ARTICULATED ARM**
ROBOTISCHER TELESKOPISCHER GELENKARM
BRAS ARTICULÉ TÉLESCOPIQUE ROBOTISÉ

(30) Priority: 21.11.2014 ES 201431720
(43) Date of publication of application: 27.09.2017
(73) Proprietor: Proytecsa Security. S.L., 28046 Madrid (ES)
(72) Inventor: SALLEN ROSELLÓ, César, 22500 Binéfar (Huesca) (ES)
(74) Representative: Ungria López, Javier
(86) International application number: PCT/ES2015/070768
(87) International publication number: WO 2016/079351

(56) References cited:
- EP-A1- 2 620 260
- EP-B1- 2 683 645
- WO-A1-00/54076
- WO-A1-2011/148134
- WO-A1-2012/038570
- WO-A2-03/074961
- CN-A- 102 490 171
- JP-A- S62 105 044
- US-A- 5 018 544
- US-A1- 2007 260 378

## Description

### PURPOSE OF THE INVENTION

The following invention, according to the definition stated in the title of this descriptive report, refers to a robotic articulated telescopic arm, whose electrohydraulic actuated arm can be installed onto specialist operational vehicles with the purpose of being able to carry out reconnaissance, detection and identification tasks for any type of dangerous artefacts, such as explosive charges, being able to control said arm from the vehicle itself upon which it is assembled or via remote control.

### FIELD OF APPLICATION

In this technical report a description is given of a robotic articulated telescopic arm, that can be installed onto military or operational vehicles used by the armed forces to carry out cleaning operations for routes or sensitive points for which said item has the capability of detecting, identify, handle, acknowledge and neutralise any type of dangerous artefacts, especially explosive devices.

### BACKGROUND TO THE INVENTION

Conventionally, whenever explosive artefacts need to be handled or dangerous operations must be undertaken, moreover when human lives are at risk, robots are used that are controlled remotely using a handling deck.

In this way, with regard to the existing robots for the handling of explosive devices, we can mention those which include a robotic arm, along a single section, without the possibility of turning in line with the horizontal plane, i.e., only having the ability to move along a vertical plane and limited by its single articulated section.

Likewise, this type of robots is fitted with a series of control elements, such as a viewing camera and proximity sensors.

On the other hand, we can bear in mind diverse patent documents, such as ES 2229938 in which a self-propelled robot is presented with equipment for manoeuvre defined by two sets of wheels and two independent engines, which create movement, each one of these fitted on a side wheel train, in such a way that the wheels do not have an equal diameter, thus meaning the robot contained in this file is less robust..

Similarly, we can bear in mind patent documents, such as ES 2241490 en in which a self-propelled robot is presented for the handling of explosive charges, which is fitted with equipment for manoeuvre defined by rolling side elements operating on adjustable tracks, fitted on the rear with a trawling shovel of adjustable length, as well as an articulated arm in the form of a hairpin activated by a pair of cylinders holding a clamp.

In document ES 1073757 a description is given of a tele-controlled robot for use in special operations, which incorporates onto the undercarriage a turret to which an arm composed of a series of segments is fitted, the arm equipped with, at least, a camera and a deterrent weapon, in such a way that the arm is comprised of a first and second segment joined via an intermediate body which allows for elbowing along parallel planes, to whose second segment a third telescopic segment is attached that is joined to a fourth segment in parallelogram which at the same time, is joined to a fifth segment and this an external sixth segment carrying a clamp.

Furthermore, we can bear in mind patent documents, such as US 6113343, JP 20040060195 and JP 200326875, in such a way that document US 6113343 describes a robot adapted for use in hostile environments and, especially, for the handling of explosives incorporating a small tower mechanism with a handling arm with a first pivotable arm turning 110° and a second pivotable arm turning 120°.

In document JP 20040060195 a description is given of a machine that is composed of a main body and a traction device fitted on each side of the main body, along with at least one device actuated using fluid under pressure to regulate the width of the undercarriage.

In document JP 200326875 a description is given of a vehicle movement means defined by lateral caterpillar running gear side where the caterpillar treads move through the action of cylinders and are driven by mounting rails and guide.

Document EP 2 620 260 A1 discloses a remote-controlled robot for special operations, such as the handling of explosives, having an articulated telescopic arm with a base support able to rotate 360°, a first articulated segment, a second articulated segment, a third articulated telesopic segment and a tool.

### DESCRIPTION OF THE INVENTION

In this technical report a description is given of a robotic articulated telescopic arm, whose remote actuation hydraulic arm that can be installed onto specialist operational vehicles with the purpose of being able to carry out reconnaissance, detection and identification tasks for any type of dangerous artefacts, such as explosive charges, in such a way that the robotic articulated telescopic arm comprises:
✔ a quickly attachable base support for fitting to vehicles with turret to assemble the arm onto, able to rotate 360° and whose support base contains a hydraulic system, an engine with a hydraulic pump and an electronic control unit;
✔ a first segment actuated using a first hydraulic cylinder attached to the base;
✔ a second articulated telescopic segment actuated by a second hydraulic cylinder associated to the first articulated segment;
✔ a third articulated telescopic segment actuated by a third hydraulic cylinder associated to the first articulated segment;
✔ at least, a tool fitted to the free end of the third articulated telescopic segment equipped with 360° rotating movement, as well as other working tools or elements;
✔ a series of positioning sensors associated with each articulated segment comprising the arm, and;
✔ a power point connecting to the vehicle's electrical system in which this is installed.

Thus the device allows for the operators to carry out different possible tasks whilst remaining at a safety distance of up to six metres.

On the other hand, the two articulated telescopic segments forming the arm remain in a vertical plane, parallel to the vertical plane of the first articulated segment allowing for the folding of the robotic arm so as to be gathered up without exceeding the gantry limits of the vehicle and without interfering with any system installed on the same.

Furthermore, in a preferred embodiment, a second articulated segment is actuated, longitudinally, by a fourth hydraulic cylinder to adjust its length, meaning that, the third articulated telescopic segment is actuated, longitudinally, by a fifth hydraulic cylinder also to adjust its length, allowing for the adaptation of the length of the same to the needs at each time.

The control and functioning systems of the robotic articulated telescopic arm can have pre-set positions stored for the arm, allowing for the completely automatic folding/unfolding of the same as quickly as possible.

The tool fitted at the free end of the third articulated telescopic segment is defined by a 360° rotating clamp, with which the different objects can be handled.

Likewise, the tool fitted at the free end of the third articulated telescopic segment can be defined as a claw to rummage in a full circle of 360°.

Similarly, the tool fitted to the free end of the third articulated telescopic segment can be defined as a metal detector.

The tool fitted at the free end of the third articulated telescopic segment can be defined as an air blower system that allows for the removal of fallen leaves, weeds, loosened sand or dust in the working point.

These devices or tools can be fitted in a combined manner thus allowing for them to perform different operations and, also, whenever an explosive charge may be detected using the claw, the surrounding area may be rummaged in using the air blower system with the aim of cleaning the area around the same as to have a perfect view for its handling.

In a variant of the practical operation of the invention the fourth hydraulic cylinder for longitudinal adjustment of the second articulated telescopic segment and the fifth hydraulic cylinder for longitudinal adjustment of the third articulated telescopic segment are integrated and protected on the inside of their tubular structure and thus being protected against any type of damage.

To complement the forthcoming description, and with the purpose of aiding the comprehension of the invention's characteristics, this technical report is accompanied by a set of plans, in which the most characteristic details of the invention are shown in an illustrative but not limitative manner.

### BRIEF DESCRIPTION OF THE DESIGNS

Figure 1. Shows an elevation view of the arm formed by three articulated segments, with two of these being telescopic, with the support base for rapid attachment to a vehicle and being able to see how at the free end a claw has been fitted for rummaging.
Figure 2. Shows a second elevation view of the articulated telescopic arm from the previous figure turned 180° and being able to see how at the free end a claw has been fitted for rummaging.
Figure 3. Shows a plan view of the articulated telescopic arm from figure 1, being able to see how the two articulated telescopic segments remain in a vertical plane, parallel to the vertical plane of the first articulated segment of fixed length and being able to see how at the free end a claw has been fitted.

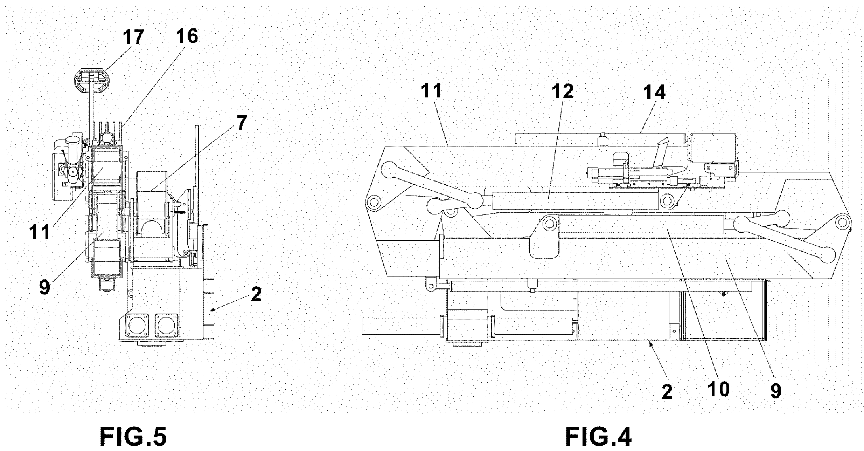

Figure 4. Shows a frontal view of the articulated telescopic arm in its folded position.
Figure 5. Shows a side elevation view of the articulated telescopic arm in its folded position.

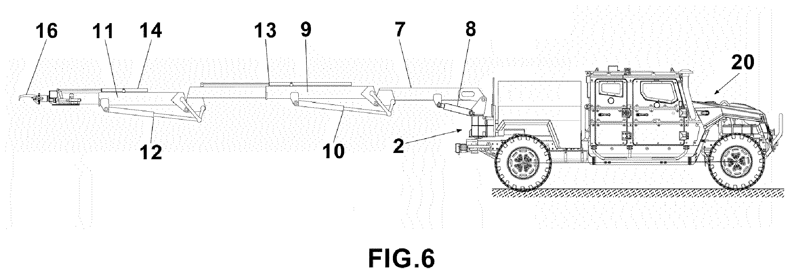

Figure 6. Shows an elevation view of a vehicle to which an articulated telescopic arm has been fitted, this time in its extended position along its longitudinal axis.
Figure 7. Shows a perspective view of the set of pieces attachable to the free end of the articulated arm comprised of a mine detector, a claw, an air blower and a thermal camera.
Figure 8. Shows a perspective view of an attachable clamp fitted to the free end of the articulated telescopic arm.

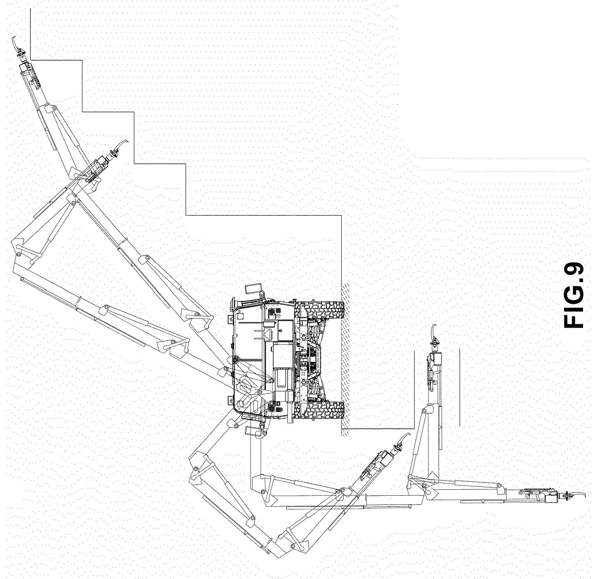

Figure 9. Shows a frontal view of a vehicle with an articulated telescopic arm, displaying the same in a plurality of possible positions, allowing for the observance of the capacity of adaptation in order to be able to access a multitude of points, both in terms of height as well as along the surface of the ground.
Figure 10. Shows an elevation view of the arm corresponding to figure 1 in which the fourth hydraulic cylinder for longitudinal adjustment of the second articulated telescopic segment and the fifth hydraulic cylinder for longitudinal adjustment of the third articulated segment are integrated and protected on the inside of their tubular structure.

### DESCRIPTION OF PREFERENTIAL UTILISATION

In view of the aforementioned figures and in accordance with the numbering used we can see how the robotic articulated telescopic arm 1 comprises a support base 2 for quick attachment to an operational vehicle 20, whose support base 2 incorporates a turret 3 onto which the arm is assembled, fitted with the capacity to rotate 360°, and incorporating, likewise, other components whose articulated telescopic arm is comprised of three segments with at least one working tool or piece of equipment fitted to free end.

In this manner, the support base 2 comprises a turret 3 for assembly of the robotic articulated telescopic arm 1 itself, a hydraulic pack unit 4 with an engine 5 for the hydraulic pump and a control and operations set of devices 6 for whose handling an interface based on PC or tablet compatibility with a communications systems via radio or optical fibre has been installed, allowing for the handling of the arm from the vehicle itself upon which it has been assembled or via remote control.

Thus, the robotic articulated telescopic arm 1 has a first segment 7 actuated, during gyratory movement, by a first hydraulic cylinder 8 associated with the support base 2; a second articulated segment 9 actuated during gyratory movement, by a second hydraulic cylinder 10 associated with the first articulated segment 7 and a third articulated segment 11 actuated during gyratory movement, by a third hydraulic cylinder 12 associated with the second articulated segment 9, fitting at the free end of the third articulated segment 11, at least, one working tool or device.

Furthermore, the second articulated segment 9 and the third articulated segment 11 present a telescopic configuration meaning that the second articulated segment 9 is requested by a fourth hydraulic cylinder 13 and the third articulated segment 11 is requested by a fifth hydraulic cylinder 14, through which its length can be adjusted in accordance with needs and that, moreover, via the corresponding positioning sensors located in the assembly turret 3 of the arm and in the first, second and third hydraulic cylinder 8, 10 and 12 allowing to know the exact positions of the same.

Thus, the fourth and fifth hydraulic cylinder include lengthwise actuation that allows the adjustment of the same in accordance with the needs of the situation.

In addition, to the free end of the third articulated telescopic segment 11 different tools and devices can be attached, such as a clamp 15, a claw 16 for rummaging or a mine detector 17, that can be associated with an air blower system 18 through which fallen leaves, sand or dust in the working place may be removed and for the different operations to be undertaken a thermal camera 19 will be fitted.

In this way, the robotic articulated telescopic electro-hydraulically actuated arm 1 can be attached, essentially, to military transport and special operational vehicles 20, through which these are able to detect, unearth, or, when necessary defuse explosive devices on roads, motorways or from other places, the arm being able to be handled as if it were a robot, from the vehicle to which it is fitted or remotely should the crew members wish to abandon the vehicle due to the presence of a serious threat.

The robotic articulated telescopic arm 1 has a reach of up to 8 m. and the same can access underground areas of up to 2 m., allowing, for example, access to ditches, the sides of motorways or passageways through fluvial currents.

On the other hand, in the memory of the set of control and functioning elements 6 the arm can have an undetermined number of pre-set positions stored for the arm, allowing the completely automatic folding / unfolding of the same as quickly as possible, for which the arm incorporates a series of sensors fitted into the assembly turret of the articulated arm and in the first, second and third hydraulic cylinder 8, 10 and 12 allowing to know the exact positions of the same.

In this way, in case that during the tasks performed by the mine detector 17 a mine is located, the tasks pertaining to its defusing or controlled explosion can be carried out from the vehicle itself or by remote control using a claw 16 for rummaging so that the mine is left exposed and, with the aid of an air blower system 18 the removal of fallen leaves, weeds, loosened sand or dust in the surrounding area will be able to be cleared, remaining free for manipulation with the use of the clamp 15.

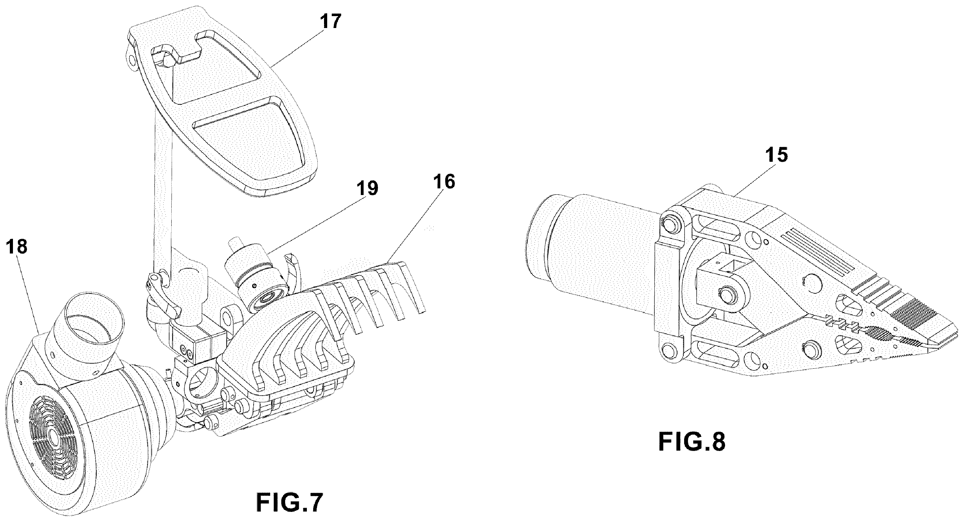

In reference to the figures it can be observed how in figure 8 a representation has been given of a vehicle fitted with a robotic articulated telescopic arm as the object of the invention with the same in a variety of positions so that its great adaptability to access high points as well as those under the surface can be seen.

In a variant of the practical operation of the invention the fourth hydraulic cylinder 13 for longitudinal adjustment of the second articulated telescopic segment 9 and the fifth hydraulic cylinder 14 for longitudinal adjustment of the third articulated telescopic segment 11, are integrated and protected on the inside of their tubular structure and thus being protected against any damage.

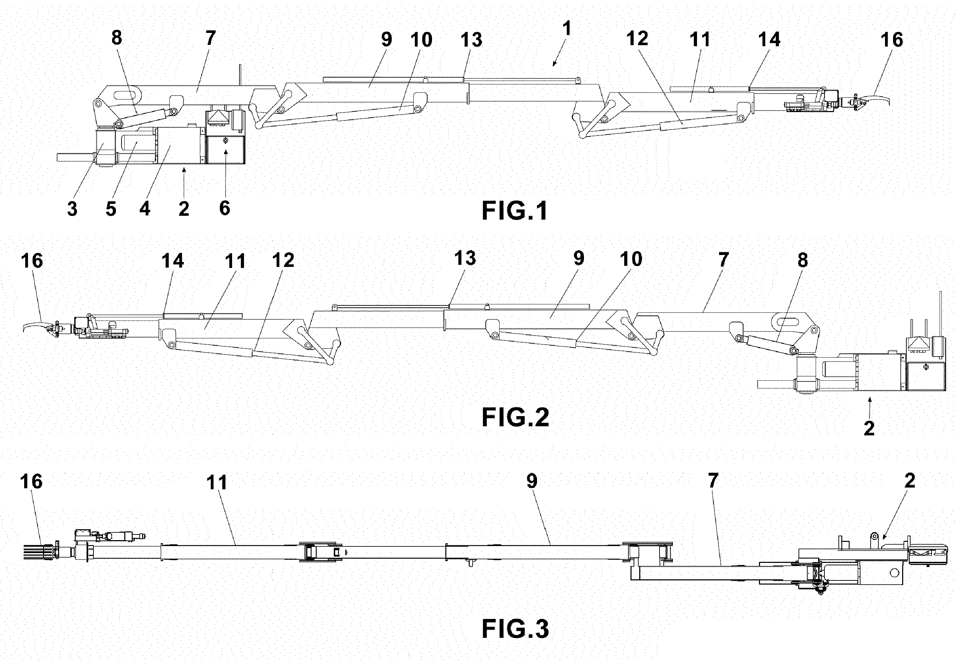

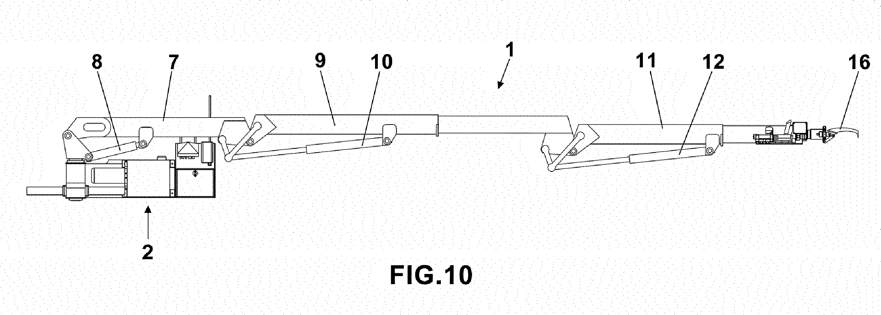

In this way, in figure 10 it is represented how the tubular structure of the second and third articulated telescopic segment 9 and 11 are to house the corresponding hydraulic cylinder 13 and 14, respectively, to adjust its length, remaining duly protected against accidental or deliberate damage that may render the same unusable. The hydraulic cylinder 13 and 14 are not referenced in figure 10 for the sake of clarity, but can be seen in figures 1 and 2.

## Claims

1. A **ROBOTIC ARTICULATED TELESCOPIC ARM,** whose arm is formed by a series of articulated segments, using remote electrohydraulic actuation that can be installed on operational vehicles to carry out reconnaissance, detection and identification tasks for any type of dangerous artefacts, such as explosive charges, **characterised in that** the robotic articulated telescopic arm (1) comprises:
✔ a quick coupling base support (2) for fitting to an operational vehicle (20) with a turret (3) assembling the arm itself, able to rotate 360° and whose support base (2) comprises a hydraulic system (4), an engine (5) of a hydraulic pump and electronics for control and operation (6);
✔ a first articulated segment (7) actuated by a first hydraulic cylinder (8) attached to the support base (2);
✔ a second articulated telescopic segment (9) actuated by a second hydraulic cylinder (10) attached to the first articulated segment (7);
✔ a third articulated telescopic segment (11) actuated by a third hydraulic cylinder (12) attached to the second articulated telescopic segment (9);
✔ at least, a tool assembled onto the free end of the third articulated telescopic segment (11) equipped with 360° rotating movement, as well as other working tools or elements;
✔ positioning sensors attached to the turret (3) for assembly of the arm and to each one of the articulated segments; and
✔ a power outlet of the electrical system of the vehicle where it is installed,
wherein the second and third articulated telescopic segments (9 and 11) remain in a vertical plane, and the first articulated segment (7) remains in a vertical plane, parallel to the vertical plane of the second and third articulated telescopic segments (9 and 11) thus allowing the folding of the robotic articulated telescopic arm (1).

2. **THE ROBOTIC ARTICULATED TELESCOPIC ARM,** according to claim 1, **characterised in that** the second articulated telescopic segment (9) is longitudinally actuated by a fourth hydraulic cylinder (13).

3. **THE ROBOTIC ARTICULATED TELESCOPIC ARM,** according to claim 1, **characterised in that** the third articulated telescopic segment (11) is longitudinally actuated by a fifth hydraulic cylinder (14).

4. **THE ROBOTIC ARTICULATED TELESCOPIC ARM,** according to claim 1, **characterised in that** the electronics for control and operation of the robotic articulated telescopic arm (1) store pre-set positions of the arm.

5. **THE ROBOTIC ARTICULATED TELESCOPIC ARM,** according to claim 1, **characterised in that** the tool fitted to the free end of the third articulated telescopic segment (11) is defined by a clamp (15) able to rotate 360°.

6. **THE ROBOTIC ARTICULATED TELESCOPIC ARM,** according to claim 1, **characterised in that** the tool fitted to the free end of the third articulated telescopic segment (11) is defined by a claw (16) for rummaging able to rotate 360°.

7. **THE ROBOTIC ARTICULATED TELESCOPIC ARM,** according to claim 1, **characterised in that** the tool attached to the free end of the third articulated telescopic segment (11) is defined by a metal detector (17).

8. **THE ROBOTIC ARTICULATED TELESCOPIC ARM,** according to claim 1, **characterised in that** the tool fitted to the free end of the third articulated telescopic segment (11) is defined by an air blower system (18).

9. **THE ROBOTIC ARTICULATED TELESCOPIC ARM,** according to claims 2 and 3, **characterised in that** the fourth hydraulic cylinder for longitudinal adjustment of the second articulated telescopic segment and the fifth hydraulic cylinder for longitudinal adjustment of the third telescopic articulated segment, are integrated and protected inside a tubular structure.

## Patentansprüche

1. Gelenk-Maschinenteleskoparm, wobei der Arm aus einer Reihe von gelenkig verbundenen Segmenten aufgebaut ist, wobei eine elektrohydraulische Fernbetätigung verwendet wird, die in Einsatzfahrzeugen zum Ausführen von Erkundungs-, Detektier- und Identifizieraufgaben für eine beliebige Art gefährlicher Produkte, etwa für Explosivladungen, montierbar ist,
**dadurch gekennzeichnet, dass**
der Gelenk-Maschinenteleskoparm (1) aufweist:
eine Schnellkupplungshalterungsbasiseinheit (2) zur Verbindung mit einem Einsatzfahrzeug (20) mit einem Werkzeugrevolver (3) zur Ausstattung des Arms, die in der Lage ist, sich um 360° zu drehen, und wobei die Halterungsbasiseinheit (2) ein Hydrauliksystem (4), einen Motor (5) einer Hydraulikpumpe und Elektronik zur Steuerung und zur Bedienung (6) aufweist;
ein erstes Gelenksegment (7), das durch einen ersten Hydraulikzylinder (8) betätigt wird, der an der Trägerbasiseinheit (2) angebracht ist;
ein zweites gelenkiges Teleskopsegment (9), das von einem zweiten Hydraulikzylinder (10) betätigt wird, der an dem ersten Gelenksegment (7) angebracht ist;
ein drittes gelenkiges Teleskopsegment (11), das von einem dritten Hydraulikzylinder (12) betätigt wird, der an dem zweiten gelenkigen Teleskopsegment (9) angebracht ist;
mindestens ein Werkzeug, das an dem freien Ende des dritten gelenkigen Teleskopsegments (11), das mit einer 360°-Drehbewegungsmöglichkeit versehen ist, sowie andere Arbeitswerkzeuge oder Elemente;
Positionssensoren, die an dem Werkzeugrevolver (3) zur Ausstattung des Arms und an jedem der gelenkigen Segmente angebracht sind; und
einen Leistungsanschluss für ein elektrisches System des Fahrzeugs, in welchem er montiert ist,
wobei
das zweite und dritte gelenkige Teleskopsegment (9 und 11) in einer vertikalen Ebene bleiben, und das erste Gelenksegment (7) in einer vertikalen Ebene bleibt, die parallel zu der vertikalen Ebene des zweiten und dritten gelenkigen Teleskopsegments (9 und 11) ist, wodurch das Einfalten des Gelenk-Maschinenteleskoparms (1) ermöglicht wird.

2. Gelenk-Maschinenteleskoparm nach Anspruch 1, **dadurch gekennzeichnet, dass** das zweite gelenkige Teleskopsegment (9) durch einen vierten Hydraulikzylinder (13) in Längsrichtung betätigt wird.

3. Gelenk-Maschinenteleskoparm nach Anspruch 1, **dadurch gekennzeichnet, dass** das dritte gelenkige Teleskopsegment (11) durch einen fünften Hydraulikzylinder (14) in Längsrichtung betätigt wird.

4. Gelenk-Maschinenteleskoparm nach Anspruch 1, **dadurch gekennzeichnet, dass** die Elektronik zur Steuerung und zur Bedienung des Gelenk-Maschinenteleskoparms (1) vorgegebene Positionen des Arms speichert.

5. Gelenk-Maschinenteleskoparm nach Anspruch 1, **dadurch gekennzeichnet, dass** das Werkzeug, das mit dem freien Ende des dritten gelenkigen Teleskopsegments (11) verbunden ist, durch eine Klemme (15) gebildet ist, die um 360° drehbar ist.

6. Gelenk-Maschinenteleskoparm nach Anspruch 1, **dadurch gekennzeichnet, dass** das mit dem freien Ende des dritten gelenkigen Teleskopsegments (11) verbundene Werkzeug durch eine Klaue (16) zum Herumstöbern, die um 360° drehbar ist, gebildet ist.

7. Gelenk-Maschinenteleskoparm nach Anspruch 1, **dadurch gekennzeichnet, dass** das an dem freien Ende des dritten gelenkigen Teleskopsegments (11) angebrachte Werkzeug einen Metalldetektor (17) aufweist.

8. Gelenk-Maschinenteleskoparm nach Anspruch 1, **dadurch gekennzeichnet, dass** das mit dem freien Ende des dritten gelenkigen Teleskopsegments (11) verbundene Werkzeug ein Luftgebläsesystem (18) aufweist.

9. Gelenk-Maschinenteleskoparm nach Anspruch 2 und 3, **dadurch gekennzeichnet, dass** der vierte Hydraulikzylinder für die Längsverstellung des zweiten gelenkigen Teleskopsegments und der fünfte Hydraulikzylinder für die Längsverstellung des dritten gelenkigen Teleskopsegments zusammen im Inneren einer Röhrenstruktur geschützt sind.

## Revendications

1. UN BRAS TÉLESCOPIQUE ARTICULÉ ROBOTIQUE, dont le bras est formé par une série de segments articulés, utilisant un actionnement électrohydraulique à distance qui peut être installé sur des véhicules opérationnels pour effectuer des tâches de reconnaissance, de détection et d'identification pour tout type d'artefacts dangereux, tels que des charges explosives, **caractérisé en ce que** le bras télescopique (1) articulé robotique comprend :
✔ un support de base (2) à liaison rapide destiné à être monté sur un véhicule opérationnel (20) avec une tourelle (3) assemblant le bras lui-même, apte à tourner sur 360° et dont l'embase de support (2) comprend un système hydraulique (4), un moteur (5) d'une pompe hydraulique et une électronique pour commande et fonctionnement (6) ;
✔ un premier segment articulé (7) actionné par un premier vérin hydraulique (8) fixé sur l'embase de support (2) ;
✔ un deuxième segment télescopique articulé (9) actionné par un deuxième vérin hydraulique (10) fixé au premier segment articulé (7) ;
✔ un troisième segment télescopique articulé (11) actionné par un troisième vérin hydraulique (12) fixé au deuxième segment télescopique articulé (9) ;
✔ au moins un outil monté sur l'extrémité libre du troisième segment télescopique articulé (11) équipé d'un mouvement de rotation de 360°, ainsi que d'autres outils ou éléments de travail ;
✔ des capteurs de positionnement fixés à la tourelle (3) pour l'assemblage du bras et à chacun des segments articulés ; et
✔ une prise de courant du système électrique du véhicule sur lequel il est installé,
les deuxième et troisième segments télescopiques articulés (9 et 11) restent dans un plan vertical, et le premier segment articulé (7) reste dans un plan vertical, parallèle au plan vertical des deuxième et troisième segments télescopiques articulés (9 et 11) permettant ainsi le pliage du bras télescopique articulé robotique (1).

2. LE BRAS TÉLESCOPIQUE ARTICULÉ ROBOTIQUE, selon la revendication 1, **caractérisé en ce que** le deuxième segment télescopique articulé (9) est actionné longitudinalement par un quatrième cylindre hydraulique (13).

3. LE BRAS TÉLESCOPIQUE ARTICULÉ ROBOTIQUE, selon la revendication 1, **caractérisé en ce que** le troisième segment télescopique articulé (11) est actionné longitudinalement par un cinquième vérin hydraulique (14).

4. LE BRAS TÉLESCOPIQUE ARTICULÉ ROBOTIQUE, selon la revendication 1, **caractérisé en ce que** l'électronique' pour la commande et le fonctionnement du bras télescopique articulé robotique (1) mémorise des positions préréglées du bras.

5. LE BRAS TÉLESCOPIQUE ARTICULÉ ROBOTIQUE, selon la revendication 1, **caractérisé en ce que** l'outil monté à l'extrémité libre du troisième segment télescopique articulé (11) est défini par une pince (15) apte à tourner sur 360°.

6. LE BRAS TÉLESCOPIQUE ARTICULÉ ROBOTIQUE, selon la revendication 1, **caractérisé en ce que** l'outil monté à l'extrémité libre du troisième segment télescopique articulé (11) est défini par une griffe (16) de fouille apte à tourner sur 360°.

7. LE BRAS TÉLESCOPIQUE ARTICULÉ ROBOTIQUE, selon la revendication 1, **caractérisé en ce que** l'outil fixé à l'extrémité libre du troisième segment télescopique articulé (11) est défini par un détecteur de métaux (17).

8. LE BRAS TÉLESCOPIQUE ARTICULÉ ROBOTIQUE, selon la revendication 1, **caractérisé en ce que** l'outil monté à l'extrémité libre du troisième segment télescopique articulé (11) est défini par un système de soufflerie (18).

9. LE BRAS TÉLESCOPIQUE ARTICULÉ ROBOTIQUE, selon les revendications 2 et 3, **caractérisé en ce que** le quatrième vérin hydraulique pour le réglage longitudinal du deuxième segment télescopique articulé et le cinquième vérin hydraulique pour le réglage longitudinal du troisième segment télescopique articulé, sont intégrés et protégés dans une structure tubulaire
